# EUROPEAN PATENT APPLICATION

(11) **EP 3 279 354 A1**
(43) Date of publication of application: **07.02.2018**
(21) Application number: 16771931.9
(22) Date of filing: 16.02.2016
(51) Int. Cl.: C22C 38/00, B23K 26/21, C22C 38/06

(54) **LASER WELDING STEEL AND LASER WELDED JOINT**

(30) Priority: 31.03.2015 JP 2015073869
(71) Applicant: Futaba Industrial Co., Ltd., Okazaki-shi, Aichi 444-8558 (JP)
(72) Inventor: YAMAGUCHI, Koji, Okazaki-shi Aichi 444-8558 (JP)
(74) Representative: Johnson, Yvonne Catherine
(86) International application number: PCT/JP2016/054436
(87) International publication number: WO 2016/158047

(57) **Abstract**

A steel material for laser welding comprises a steel material selected from a group consisting of hot-rolled mild steel plates, sheets and strips specified in JIS G 3131 (2011), cold-reduced carbon steel sheets and strips specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134 (2011), cold-reduced high strength steel sheets and strips with improved formability for automobile structural uses specified in JIS G 3135 (2011), and carbon steel tubes for machine structure specified in JIS G 3445 (2011); and 0.04 to 1% (% means mass percent, the same is applied hereinafter) of sol. Al.

## Description

### CROSS-REFERENCE TO RELATED APPLICATION

This international application claims the benefit of Japanese Patent Application No. 2015-73869 filed on March 31, 2015 with the Japan Patent Office, and the entire disclosure of Japanese Patent Application No. 2015-73869 is incorporated herein by reference.

### TECHNICAL FIELD

The present disclosure relates to a steel material for laser welding and a laser-welded joined body.

### BACKGROUND ART

For mutual joining of steel materials, such as a steel plate, laser welding, such as CO₂ laser welding, is employed. For example, a specified portion of a plurality of overlapped steel materials is irradiated with a laser, and the portion irradiated with the laser is melted and solidified to form a welded metal portion. The steel materials are then mutually joined via the welded metal portion (see, for example, Patent Document 1).

### PRIOR ART DOCUMENTS

### PATENT DOCUMENTS

Patent Document 1: Japanese Unexamined Patent Application Publication No. 2013-132686

### SUMMARY OF THE INVENTION

### PROBLEMS TO BE SOLVED BY THE INVENTION

However, although laser welding has an advantage of being able to be performed in the atmosphere, atmospheric nitrogen, oxygen, and the like are absorbed into a metal that has been melted by laser irradiation, and the nitrogen, oxygen, and the like are released during solidification of the molten metal. As a result, there is a possibility that weld defects, such as pits and blowholes, may occur in a laser welded section (a welded metal portion). Such weld defects may cause degradation of appearance and reduction of weld strength.

In the present disclosure, it is desirable to provide a steel material for laser welding and a laser-welded joined body that are capable of reducing occurrence of weld defects, such as pits and blowholes, in a laser welded section.

### MEANS FOR SOLVING THE PROBLEMS

A steel material for laser welding of one embodiment of the present disclosure comprises a steel material selected from a group consisting of hot-rolled mild steel plates, sheets and strips specified in JIS G 3131 (2011), cold-reduced carbon steel sheets and strips specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134 (2011), cold-reduced high strength steel sheets and strips with improved formability for automobile structural uses specified in JIS G 3135 (2011), and carbon steel tubes for machine structure specified in JIS G 3445 (2011); and 0.04 to 1% (% means mass percent, the same is applied hereinafter) of sol. Al.

The steel material for laser welding is the aforementioned specific steel material and the content of sol. Al (hereinafter appropriately referred to as "solid solution Al") is within the aforementioned specific range. Thus, for example, if atmospheric nitrogen, oxygen, and the like have been absorbed into molten metal during mutual laser welding of the steel materials, a small amount of the solid solution Al contained in the steel materials traps the nitrogen, oxygen, and the like. The trapping effect of nitrogen, oxygen, and the like, which is obtained by the solid solution Al, enables reduction in release of nitrogen, oxygen, and the like during solidification of the molten metal. Consequently, occurrence of weld defects, such as pits and blowholes caused by nitrogen, oxygen, and the like, in the laser welded section (the welded metal portion) can be reduced.

The aforementioned steel material for laser welding may comprise a content of 0.04 to 0.12% of sol. Al therein. In this case, occurrence of weld defects, such as pits and blowholes, in the laser welded section (the welded metal portion) can be sufficiently reduced.

A laser-welded joined body of another embodiment of the present disclosure is configured by joining steel plates by laser welding, and each of the steel plate comprises 0.04 to 1% (% means mass percent, the same is applied hereinafter) of the sol. Al therein.

In the aforementioned laser-welded joined body, the content of sol. Al (solid solution Al) in the steel plates to be joined by laser welding is within the aforementioned specific range. Thus, if atmospheric nitrogen, oxygen, and the like have been absorbed into molten metal during mutual laser welding of the steel plates, a small amount of the solid solution Al contained in the steel plates traps the nitrogen, oxygen, and the like. The trapping effect of nitrogen, oxygen, and the like, which is obtained by the solid solution Al, enables reduction in release of nitrogen, oxygen, and the like during solidification of the molten metal. Consequently, occurrence of weld defects, such as pits and blowholes caused by nitrogen, oxygen, and the like, in the laser welded section (the welded metal portion) can be reduced.

In the aforementioned laser-welded joined body, each of the steel plate may comprise a content of 0.04 to 0.12% of the sol. Al therein. In this case, occurrence of weld defects, such as pits and blowholes, in the welded section (the welded metal portion) can be sufficiently reduced.

Thus, according to the present disclosure, a steel material for laser welding and a laser-welded joined body that are capable of reducing occurrence of weld defects, such as pits and blowholes, in the laser welded section can be provided.

### BRIEF DESCRIPTION OF THE DRAWINGS

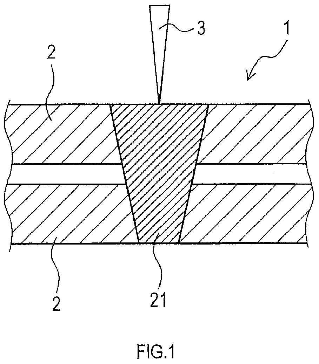

FIG. 1 is a sectional explanatory diagram showing a laser-welded joined body.

### EXPLANATION OF REFERENCE NUMERALS

1...laser-welded joined body, 2...steel plate (steel material), 21...welded metal portion

### MODE FOR CARRYING OUT THE INVENTION

Hereinafter, an embodiment of the present disclosure will be described. However, the present disclosure is not limited to the embodiment below, and may be practiced in various manners within the scope not departing from the subject matter of the present disclosure. Further, configurations achieved by appropriately combining different embodiments also fall within the scope of the present disclosure.

### <Steel Material for Laser Welding >

A steel material for laser welding of the present disclosure is a steel material used for laser welding. The steel material for laser welding is, for example, a steel material used when steel materials are mutually joined by laser welding. Laser welding includes, for example, CO₂ laser welding, YAG laser welding, semiconductor laser welding, LD excitation solid laser welding (including disk laser welding), and fiber laser welding.

A steel material adopted for the steel material for laser welding is one type of steel material selected from a group consisting of hot-rolled mild steel plates, sheets and strips specified in JIS G 3131 (2011), cold-reduced carbon steel sheets and strip specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134 (2011), cold-reduced high strength steel sheets and strips with improved formability for automobile structural uses specified in JIS G 3135 (2011), carbon steel tubes for machine structure specified in JIS G 3445 (2011).

JIS G 3131 (2011): The types of hot-rolled mild steel plates, sheets and strips include SPHC, SPHD, SPHE, and SPHF. A chemical composition of each type is as indicated in the following Table 1. Also, other characteristics and the like of each type are as specified in JIS.

**[Table 1]**

| Unit:% | | | | |
|---|---|---|---|---|
| Symbol of Type | C | Mn | P | S |
| SPHC | 0.12 or less | 0.60 or less | 0.045 or less | 0.035 or less |
| SPHD | 0.10 or less | 0.45 or less | 0.035 or less | 0.035 or less |
| SPHE | 0.08 or less | 0.40 or less | 0.030 or less | 0.030 or less |
| SPHF | 0.08 or less | 0.35 or less | 0.025 or less | 0.025 or less |

JIS G 3141 (2011): The types of cold-reduced carbon steel sheets and strips include SPCC, SPCD, SPCE, SPCF, and SPCG. The chemical composition of each type is as indicated in the following Table 2. Also, other characteristics and the like of each type are as specified in JIS.

**[Table 2]**

| Unit: % | | | | |
|---|---|---|---|---|
| Symbol of Type | C | Mn | P | S |
| SPCC | 0.15 or less | 0.60 or less | 0.100 or less | 0.050 or less |
| SPCD | 0.12 or less | 0.50 or less | 0.040 or less | 0.040 or less |
| SPCE | 0.10 or less | 0.45 or less | 0.030 or less | 0.030 or less |
| SPCF | 0.08 or less | 0.45 or less | 0.030 or less | 0.030 or less |
| SPCG | 0.02 or less | 0.25 or less | 0.020 or less | 0.020 or less |

JIS G 3113 (2011): The types of hot-rolled steel plates, sheets and strips for automobile structural uses include SAPH310, SAPH370, SAPH400, and SAPH440. The chemical composition of each type is as indicated in the following Table 3. Also, other characteristics and the like of each type are as indicated in JIS.

**[Table 3]**

| Unit: % | | |
|---|---|---|
| Symbol of Type | P | S |
| SAPH310 | 0.040 or less | 0.040 or less |
| SAPH370 | | |
| SAPH400 | | |
| SAPH440 | | |

JIS G 3134 (2011): The types of hot-rolled high strength steel plates, sheets and strips with improved formability for automobile structural uses include SPFH490, SPFH540, SPFH590, SPFH540Y, and SPFH590Y. Characteristics and the like of each type are as specified in JIS.

JIS G 3135 (2011): The types of cold-reduced high strength steel sheets and strips with improved formability for automobile uses include SPFC340, SPFC370, SPFC390, SPFC440, SPFC490, SPFC540, SPFC590, SPFC490Y, SPFC540Y, SPFC590Y, SPFC780Y, SPFC980Y and SPFC340H. Characteristics and the like of each type of the steel sheet and strip are as specified in JIS.

JIS G 3445 (2011): The types of carbon steel tubes for machine structure include STKM11A, STKM12A, STKM12B, STKM12C, STKM13A, STKM13B, STKM13C, STKM14A, STKM14B, STKM14C, STKM15A, STKM15C, STKM16A, STKM16C, STKM17A, STKM17C, STKM18A, STKM18B, STKM18C, STKM19A, STKM19C, and STKM20A. The chemical composition of each type is as indicated in the following Table 4. STKM20A may contain both Nb and V, and the total content of Nb and V may be 0.015% or less in this case. Further, other characteristics and the like of each type are as specified in JIS.

**[Table 4]**

| Unit: % | | | | | | |
|---|---|---|---|---|---|---|
| Symbol of Type | C | Si | Mn | P | S | Nb or V |
| STKM11A | 0.12 or less | 0.35 or less | 0.60 or less | 0.040 or less | 0.040 or less | - |
| STKM12A | 0. 20 or less | 0. 35 or less | 0.60 or less | 0. 040 or less | 0. 040 or less | - |
| STKM12B | | | | | | |
| STKM12C | | | | | | |
| STKM13A | 0.25 or less | 0.35 or less | 0.30-0.90 | 0.040 or less | 0.040 or less | - |
| STKM13B | | | | | | |
| STKM13C | | | | | | |
| STKM14A | 0.30 or less | 0.35 or less | 0.30-1.00 | 0.040 or less | 0.040 or less | - |
| STKM14B | | | | | | |
| STKM14C | | | | | | |
| STKM15A | 0. 25-0. 35 | 0. 35 or less | 0. 30-1. 00 | 0.040 or less | 0. 040 or less | - |
| STKM15C | | | | | | |
| STKM16A | 0.35-0.45 | 0.40 or less | 0.40-1.00 | 0.040 or less | 0.040 or less | - |
| STKM16C | | | | | | |
| STKM17A | 0. 45-0. 55 | 0. 40 or less | 0. 40-1. 00 | 0. 040 or less | 0.040 or less | - |
| STKM17C | | | | | | |
| STKM18A | 0. 18 or less | 0.55 or less | 1.50 or less | 0.040 or less | 0.040 or less | - |
| STKM18B | | | | | | |
| STKM18C | | | | | | |
| STKM19A | 0. 25 or less | 0. 55 or less | 1. 50 or less | 0. 040 or less | 0. 040 or less | - |
| STKM19C | | | | | | |
| STKM20A | 0.25 or less | 0.55 or less | 1.60 or less | 0.040 or less | 0.040 or less | 0.015 or less |

As mentioned above, the steel material for laser welding is one type of steel material selected from the plurality of steel materials specified in JIS, and the content of sol. Al (solid solution Al) of the steel material is 0.04 to 1%. The sol. Al contained in the steel material traps, during laser welding, atmospheric nitrogen, oxygen, and the like which have been absorbed into molten metal (for example, Al and N₂ are bonded to generate AlN, whereas Al and O₂ are bonded to generate Al₂O₃). Trapping effect of nitrogen, oxygen, and the like, which is obtained by solid solution Al enables reduction in release of nitrogen, oxygen, and the like during solidification of the molten metal. Consequently, occurrence of weld defects, such as pits, blowholes, in a laser welded section (welded metal portion) can be reduced.

Further, in the case of remote welding (remote laser welding), a distance between a laser light source and a workpiece (the steel material) is large, and it is difficult to use shielding gas (Ar, He, and the like) during laser welding. As a result, the atmospheric nitrogen, oxygen, and the like tend to be absorbed into the molten metal during laser welding. Thus, the aforementioned trapping effect of the nitrogen, oxygen, and the like, which is obtained by solid solution Al can be exhibited more effectively, and the occurrence of weld defects, such as pits and blowholes, in the welded section (welded metal portion) can be reduced sufficiently.

If the content of sol. Al (solid solution Al) in the steel material for laser welding is less than 0.04%, the aforementioned trapping effect of nitrogen, oxygen, and the like, to be obtained by solid solution Al cannot be exhibited sufficiently, and therefore the occurrence of the weld defects, such as pits and blowholes, in the laser welded section (welded metal portion) cannot be reduced sufficiently. Further, if the content of sol. Al (solid solution Al) exceeds 1%, there will be other problems in that manufacturing management of the steel material becomes difficult and formability in pressing or the like is reduced.

As mentioned above, the steel material for laser welding is one type of a steel material selected from the plurality of steel materials specified in JIS, and the content of sol. Al (solid solution Al) of the steel material is 0.04 to 1%. Elements contained in the steel material will now be described below.

C:
C has an effect to enhance strength of the steel material. To secure the strength of the steel material, the steal material may contain a specified amount of C. On the other hand, since there is a possibility that the weldability of the steel material will be decreased if the content of C in the steel material increases, the content of C may be the specified amount or less (or less than the specified amount).

Si:
Since Si has an effect to enhance the strength of the steel material and an effect as a deoxidizer in the steel material, the steel material may contain a specified amount of Si therein. On the other hand, since there is a possibility that the toughness and the weldability of the steel material will be decreased if the content of Si in the steel material increases, the content of Si may be the specified amount or less (or less than the specified amount).

Mn:
Since Mn has an effect to enhance the strength of the steel material, the steel material may contain a specified amount of Mn therein. On the other hand, since there is a possibility that the toughness of the steel material will be decreased if the content of Mn in the steel material increases, the content of Mn may be the specified amount or less (or less than the specified amount).

P:
Since there is a possibility that P will decrease the toughness of the steel material, the content of P in the steel material may be a specified amount or less (or less than the specified amount).

S:
Since there is a possibility that S will decrease the toughness of the steel material, the content of S in the steel material may be a specified amount or less (or less than the specified amount).

Nb:
Since Nb has an effect to reduce coarsening of crystal grains in the steel material, the steel material may contain a specified amount of Nb therein. On the other hand, since there is a possibility that the toughness of the steel material will be decreased if the content of Nb in the steel material increases, the content of Nb may be the specified amount or less (or less than the specified amount).

V:
Since V has an effect to reduce coarsening of crystal grains in the steel material, the steel material may contain a specified amount of V therein. On the other hand, since there is a possibility that the toughness of the steel material will be decreased if the content of V in the steel material increases, the content of V may be specified amount or less (or less than specified amount).

sol. Al:
Since Al has an effect as a deoxidizer in the steel material, in addition to the aforementioned effects, the steel material may contain specified amount of sol. Al therein. On the other hand, since there is a possibility that the toughness of the steel material will be decreased if the content of Al in the steel material increases, the content of sol. Al may be a specified amount or less (or less than the specified amount).

### <Laser-Welded Joined Body>

The laser-welded joined body of the present disclosure is configured by joining a plurality of steel plates by laser welding. The laser-welded joined body is obtained, for example, by forming a welded metal portion in a specified portion of a plurality of overlapped steel plates by laser welding, and thereby joining the plurality of steel plates via the welded metal portion. Laser welding includes, for example, any of the aforementioned various types of laser welding and the like.

The steel plate that can be used is any of the aforementioned steel materials, specifically, hot-rolled mild steel plates, sheets and strips specified in JIS G 3131 (2011), cold-reduced carbon steel sheets and strips specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134 (2011), cold-reduced high strength steel sheets and strips with improved formability for automobile structural uses specified in JIS G 3135 (2011), carbon steel tubes for machine structure specified in JIS G 3445 (2011) can be used.

The content of sol. Al (solid solution Al) in the steel plate is 0.04 to 1%. Solid solution Al contained in the steel plate traps, during laser welding, atmospheric nitrogen, oxygen, and the like which have been absorbed into the molten metal (for example, Al and N₂ are bonded to generate AlN, and Al and O₂ are bonded to generate Al₂O₃). The trapping effect of nitrogen, oxygen and the like, which is obtained by solid solution Al, enables reduction in release of nitrogen, oxygen, and the like during solidification of molten metal. Consequently, the occurrence of weld defects, such as pits and blowholes, in the laser welded section (welded metal portion) can be reduced.

Further, as mentioned above, in the case of remote welding (remote laser welding), the atmospheric nitrogen, oxygen, and the like tend to be absorbed into the molten metal during laser welding. Thus, the aforementioned trapping effect of nitrogen, oxygen, and the like, which is obtained by the solid solution Al can be exhibited more effectively, and thereby the occurrence of the weld defects such as pit and blowhole in the laser welded section (welded metal portion) can be reduced sufficiently.

If the content of sol. Al (solid solution Al) in the steel plate is less than 0.04%, the aforementioned trapping effect of nitrogen, oxygen, and the like, which is obtained by solid solution Al cannot be exhibited sufficiently, and thereby the occurrence of the weld defects, such as pits and blowholes, in the laser welded section (welded metal portion) cannot be reduced sufficiently. Further, if the content of sol. Al (solid solution Al) exceeds 1%, other problems may occur in which manufacturing management for the steel plate becomes difficult and workability in pressing or the like is reduced.

A thickness of the steel plate may be within a range of 0.4mm to 4 mm. By defining the thickness of the steel plate to be within the particular range, the plurality of overlapped steel plates can be easily joined by laser welding. Also, by configuring the steel plate to be a thin plate having such particular thickness range, the amount of the atmospheric nitrogen, oxygen, and the like which are absorbed into the molten metal can be reduced during laser welding. Accordingly, the trapping effect of nitrogen, oxygen, and the like, which is obtained by the solid solution Al can be sufficiently exhibited, and thereby the occurrence of weld defects, such as pits and blowholes, in the laser welded section can be reduced sufficiently.

If the thickness of the steel plate is less than 0.4 mm, there is a possibility that the mutual welding of the steel plates may be insufficient even if a space between the overlapped steel plates is, for example, about 0.1 mm. Further, if the thickness of the steel plate exceeds 4 mm, the welded metal portion cannot be formed, for example, so as to penetrate a plurality of the overlapped steel plates, and consequently welding (for example, penetration welding) of the plurality of the steel plates may be insufficient.

For the steel plate, one type of a steel plate selected from the aforementioned plurality of the steel plates specified in JIS may be used, and the content of sol. Al (solid solution Al) is 0.04 to 1%. The elements (C, Si, Mn, P, S, Nb, V, sol. Al) contained in the steel plate have been described above.

The steel material for laser welding and the laser-welded joined body of the present disclosure can be applied, for example, as parts, materials, and the like for land vehicles, such as automobiles. Since laser welding is employed for parts, members, and the like for land vehicles, such as automobiles, the effect of the present disclosure can be effectively exhibited.

Note that JIS stands for Japan Industrial Standards, and the contents (types and chemical compositions of the steel materials) specified in JIS are based on descriptions in JIS Handbook (published on January 21, 2011).

### [Example]

An example of the present disclosure will now be described in comparison with a comparative example to demonstrate the effect of the present disclosure. The example is to show one embodiment of the present disclosure, and the present disclosure is not limited to the example.

### (Example 1)

Firstly, various steel plates (Samples 1 and 2 as the comparative examples; Sample 3 as the example of the present disclosure) having chemical compositions shown in the following Table 5 were prepared. In Table 5, "sol. Al", "ins. Al", and "Bal." respectively indicate solid solution Al, non-solid solution Al, and remaining components (Balance).

The various steel plates are hot-rolled mild steel plates, sheets and strips specified in JIS G 3131 (2011) (type: SPHC; thickness: 2.3 mm), and are different in the content of sol. Al (solid solution Al). Specifically, the various steel plates contain C: 0.12% or less, Mn: 0.60% or less, P: 0.045% or less, S: 0.035% or less, sol. Al (solid solution Al): the specified amount (Sample 1: 0.02%, Sample 2: 0.03%, Sample 3: 0.05%), and the balance is Fe and inevitable impurities.

**[Table 5]**

| Unit: % | | | | | | | |
|---|---|---|---|---|---|---|---|
| Sample | C | Mn | P | S | sol.Al | ins.Al | Fe |
| 1 | 0.12 or less | 0.60 or less | 0.045 or less | 0.035 or less | 0.02 | 0.00 | Bal. |
| 2 | | | | | 0.03 | 0.00 | |
| 3 | | | | | 0.05 | 0.00 | |

Secondly, with respect to each of the various steel plates, evaluation was made on the weld defects caused by laser welding.

Specifically, as shown in FIG. 1, two steel plates 2 of the same type having surfaces degreased with acetone were overlapped. And then a specified portion of the overlapped steel plates 2 was irradiated with a laser 3, and the irradiated portion with the laser 3 was melted and solidified to form a welded metal portion 21 so as to penetrate the two overlapped steel plates 2. Laser welding was performed by remote CO₂ laser welding. Welding conditions were set as laser output: 3 kW; work distance (distance between a laser light source and a workpiece): 900 mm; and welding speed: 1 m per minute.

As a result, there was obtained a laser-welded joined body 1 formed by joining the two steel plates 2 via the welded metal portion 21. Then, visual confirmation was made whether the weld defects, such as pits, have occurred on a surface of the welded metal portion 21, which is the laser welded section. Also, the chemical composition of the welded metal portion 21 was examined.

**[Table 6]**

| Unit: % | | | | | |
|---|---|---|---|---|---|
| Sample | Base Material | | Welded Metal Portion | | Weld Defects |
| | sol.Al | ins.Al | sol.Al | ins.Al | |
| 1 | 0.02 | 0.00 | 0.01 | 0.01 | Occurred (Many) |
| 2 | 0.03 | 0.00 | 0.02 | 0.02 | Occurred (A Few) |
| 3 | 0.05 | 0.00 | 0.03 | 0.02 | None |

The evaluation of the weld defects caused by laser welding is shown in Table 6.

As can be understood from Table 6, with respect to the steel plates (the laser-welded joined body) of Sample 1 and 2, which were comparative examples, weld defects, such as pits, occurred in the laser welded section (the welded metal portion), since the content of sol. Al (solid solution Al) of a base material was less than 0.04%. As a result of comparison between Sample 1 and Sample 2, Sample 2 having a greater content of sol. Al (solid solution Al) had a fewer number of weld defects. In Table 6, the evaluation was described as "Sample 1: weld defects occurred (Many", and "Sample 2: weld defects occurred (A Few)."

On the other hand, with respect to the steel plate (the laser-welded joined body) of Sample 3, which is the example of the present disclosure, weld defects, such as pits, in the laser welded section (welded metal portion) did not occur, since the content of sol. Al of the base material was 0.04% or more. In Table 6, the evaluation was described as "Sample 3: weld defects not occurred (None)."

It is considered that sol. Al (solid solution Al) contained in the steel plate has trapped, during laser welding, the atmospheric nitrogen, oxygen, and the like that were absorbed into the molten metal, and reduced a release of nitrogen, oxygen, and the like during solidification of the molten metal, and thereby to reduce the occurrence of weld defects, such as pits, in the laser welded section (welded metal portion).

Further, with respect to Sample 3, the content of sol. Al (solid solution Al) of the welded metal portion was smaller than the content of sol. Al (solid solution Al) of the base material, and the content of ins. Al (non-solid solution) of the welded metal portion was greater than the content of ins. Al (non-solid solution) of the base material. It is therefore considered that upon occurrence of some state change in sol. Al (solid solution Al) in the steel material, sol. Al (solid solution Al) has trapped such amounts of nitrogen (N₂), oxygen (O₂), and the like that correspond to an amount of ins. Al (non-solid solution Al) in the welded metal portion.

Note that, although the hot-rolled mild steel plates, sheets and strips specified in JIS G 3131 (2011) (Type: SPHC) was used for the steel material in Example 1, it is assumed that the same result as the result of Example 1 can be obtained by adjusting the content of sol. Al (solid solution Al) in the steel material, if any of the various steel plates applicable to the present disclosure (hot-rolled mild steel plates, sheets and strips specified in JIS G 3131 (2011), cold-reduced carbon steel sheets and strips specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134(2011), cold-reduced high strength steel sheets and strips with improved formability for automobile structural uses specified in JIS G 3135(2011), and carbon steel tubes for machine structure specified in JIS G 3445(2011)) is used.

## Claims

1. A steel material for laser welding comprising:
a steel material selected from a group consisting of hot-rolled mild steel plates, sheets and strips specified in JIS G 3131 (2011), cold-reduced carbon steel sheets and strips specified in JIS G 3141 (2011), hot-rolled steel plates, sheets and strips for automobile structural uses specified in JIS G 3113 (2011), hot-rolled high strength steel plates, sheets and strips with improved formability for automobile structural uses specified in JIS G 3134 (2011), cold-reduced high strength steel sheets and strips with improved formability for automobile structural uses specified in JIS G 3135 (2011), and carbon steel tubes for machine structure specified in JIS G 3445 (2011); and
0.04 to 1% (% means mass percent, the same is applied hereinafter) of sol. Al.

2. The steel material for laser welding according to claim 1, wherein the steel material comprises 0.04 to 0.12% of the sol. Al.

3. A laser-welded joined body configured by joining steel plates by laser welding, each of the steel plate comprising a content of 0.04 to 1% (% means mass percent, the same is applied hereinafter) of sol. Al.

4. The laser-welded joined body according to claim 3, wherein each of the steel plate comprises a content of 0.04 to 0.12% of the sol. Al.
